# FASCICULE DE BREVET EUROPEEN

(11) **EP 3 144 589 B1**
(45) Date de publication et mention de la délivrance du brevet: **18.07.2018**
(21) Numéro de dépôt: 16189051.2
(22) Date de dépôt: 15.09.2016
(51) Int. Cl.: F21V 9/35, F21V 8/00, F21S 41/24, F21K 9/61

(54) **DISPOSITIF LUMINEUX, NOTAMMENT POUR VÉHICULE AUTOMOBILE ET PROJECTEUR COMPRENANT UN TEL DISPOSITIF**
LEUCHTVORRICHTUNG, INSBESONDERE FÜR KRAFTFAHRZEUG, UND SCHEINWERFER, DER EINE SOLCHE VORRICHTUNG UMFASST
LIGHTING DEVICE, IN PARTICULAR FOR A MOTOR VEHICLE, AND HEADLAMP COMPRISING SUCH A DEVICE

(30) Priorité: 15.09.2015 FR 1558655
(43) Date de publication de la demande: 22.03.2017
(73) Titulaire: VALEO VISION, 93012 Bobigny Cedex (FR)
(72) Inventeur: ALBOU, Pierre, 75013 PARIS (FR); MOREL, Xavier, 75015 PARIS (FR); STEFURA, Eric, 94100 Saint-Maur-des-Fossés (FR)

(56) Documents cités:
- WO-A1-2011/131197
- US-A1- 2007 189 352
- US-A1- 2011 044 070
- US-A1- 2011 157 865
- US-A1- 2011 194 302
- US-A1- 2011 280 039

## Description

L'invention concerne un dispositif lumineux et un projecteur comprenant un tel dispositif.

Il est connu des projecteurs de véhicules automobiles utilisant des sources de lumière, notamment des diodes électroluminescentes, qui sont agencées directement dans le projecteur ou à proximité immédiate de celui-ci. Afin de dissiper la chaleur dégagée par les diodes électroluminescentes, sont utilisés des dispositifs de refroidissement. Cependant, ces dispositifs de refroidissement sont encombrants et offrent peu de liberté quant à leur positionnement puisqu'ils doivent être agencés au voisinage des sources de lumière qu'ils refroidissent. US2011/0194302 divulgue d'autres types de projecteurs de véhicule automobile connus comprenant des guides de lumières émettant, par leur extrémité distale, de la lumière générée par plusieurs sources lumineuses dans un élément émetteur de lumière. L'un des objets de l'invention est de résoudre ces inconvénients. Pour ce faire, l'invention propose un dispositif lumineux, notamment pour véhicule automobile, selon la revendication 1. On entend par guide de lumière une pièce optique agencée de manière à permettre la propagation de la lumière par réflexion(s) interne(s) totale(s) depuis un dioptre d'entrée jusqu'à un dioptre de sortie principal.

Dès lors, l'utilisation de guides de lumière permet de positionner librement la source de lumière et donc le dispositif de refroidissement relativement au projecteur, la lumière pouvant être ensuite acheminée en un point choisi de celui-ci à l'aide des guides de lumière. En outre, alors que les guides de lumière génèrent des faisceaux lumineux de faible ouverture angulaire, l'élément de conversion permet d'augmenter cette ouverture angulaire afin d'obtenir un signal lumineux diffus, plus homogène.

Selon différents aspects de l'invention, qui pourront être pris ensemble ou séparément :
- les guides de lumière comprennent des fibres optiques,
   les fibres optiques sont des guides de lumière souples et fins, la lumière s'y propage dans un coeur entouré d'une gaine. Ce coeur peut présenter par exemple un diamètre inférieur à 1mm, notamment inférieur à 0,1mm.
- les guides de lumière sont agencés en un faisceau, des extrémités de sortie des guides de lumière dudit faisceau étant disposées de manière à être sensiblement confondues avec un même plan, dit plan d'émission,
- les extrémités de sortie des guides de lumière ont été polies de manière à former ledit plan d'émission,
- l'élément de conversion est disposé au niveau du plan d'émission,
- l'élément de conversion est apte à diffuser les faisceaux lumineux dans toutes les directions,
- l'élément de conversion présente une structure à plat,
- l'élément de conversion comprend un matériau transparent à faible dispersion,
- l'élément de conversion comprend au moins un luminophore,
- l'élément homogénéisant est agencé entre la sortie desdits guides de lumière et ledit élément de conversion,
- l'élément homogénéisant comprend une plaque munie d'un canal, ledit élément homogénéisant étant agencé de manière à ce que ledit canal soit traversé par la lumière issue des guides de lumière,
- l'élément de conversion est agencé à l'intérieur dudit canal.

L'invention concerne encore un projecteur, notamment pour véhicule automobile, comprenant un dispositif lumineux tel que précédemment décrit. Selon différents aspects de l'invention, qui pourront être pris ensemble ou séparément :
- La source lumineuse est agencée à l'intérieur d'un boitier du projecteur,
- La source lumineuse est agencée à l'extérieur dudit boitier.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés :
- La figure 1 est une représentation schématique en vue de côté du dispositif lumineux selon l'invention.
- La figure 2 est une représentation schématique en vue de côté d'une partie simplifiée du dispositif lumineux illustré à la figure 1.
- La figure 3 est une représentation schématique en vue de face d'après la figure 2, en sortie de l'élément homogénéisant du dispositif représenté.
- La figure 4 est une représentation schématique en vue de côté du dispositif lumineux, selon un autre mode de réalisation.
- La figure 5 est une représentation schématique en vue de côté du dispositif lumineux, selon un autre mode de réalisation.
- La figure 6 est une représentation schématique en vue de côté du dispositif lumineux, selon un autre mode de réalisation.

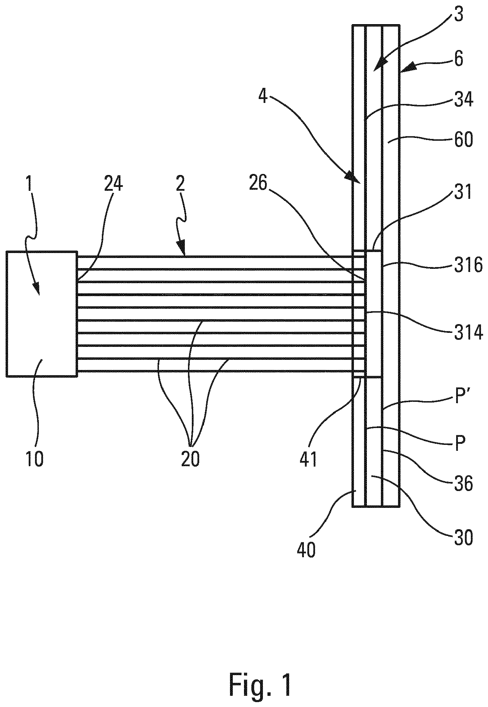

Comme illustré à la figure 1, l'invention concerne un dispositif lumineux ou dispositif d'émission de lumière, notamment pour véhicule automobile. Ledit dispositif comprend une source lumineuse ou une source émettrice 1 de lumière, plusieurs guides de lumière 2 et un élément de conversion 6. Le dispositif lumineux est conçu de sorte que la lumière puisse se propager de la source lumineuse 1 à l'élément de conversion 6 en passant par les guides de lumière 2. On note que le dispositif conforme à l'invention génère un flux lumineux présentant successivement des formes différentes qui seront décrites par la suite.

Ladite source lumineuse 1 comprend par exemple une puce à semi-conducteur émettrice de lumière, notamment une diode électroluminescente 10. Avantageusement, ladite diode 10 émet un flux lumineux de manière diffuse, c'est-à-dire sur une plage angulaire large. La lumière émise par la diode électroluminescente est spatialement homogène. Autrement dit, le flux lumineux émis par la source lumineuse 1 de lumière, lorsque considéré au niveau d'une sortie de ladite source lumineuse de lumière 1, est avantageusement dépourvue de zones non-émettrices de lumière.

On note que la source lumineuse 1 pourra notamment comprendre une diode laser.

Les guides de lumière 2 sont eux conçus pour acheminer au moins une partie dudit flux lumineux de la source lumineuse 1 vers l'élément de conversion 6.

Avantageusement, les guides de lumière 2 comprennent des fibres optiques 20. Lesdites fibres optiques 20 comprennent chacune une extrémité d'entrée 24 et une extrémité de sortie 26 et s'étendent longitudinalement selon une direction principale d'extension, rectiligne ou non, entre ladite extrémité d'entrée 24 et ladite extrémité de sortie 26. L'extrémité d'entrée 24 de chaque fibre optique est agencée au niveau de la source émettrice. Avantageusement, l'extrémité d'entrée 24 de la fibre optique pourra se trouver au niveau ou à proximité immédiate de la source émettrice 1. L'extrémité de sortie 26 est, elle, agencée au niveau de l'élément de conversion 6. On note que les extrémités de sortie 26 des fibres optiques 20 correspondent à une sortie desdites fibres optiques 20.

Les extrémités d'entrée 24 des fibres optiques 20 sont configurées de sorte que le flux lumineux issu de la source émettrice 1 ou tout du moins une partie de celui-ci pénètrent à l'intérieur desdites fibres optiques 20. A l'intérieur desdites fibres optiques 20, le flux lumineux se propage notamment par réflexion interne totale.

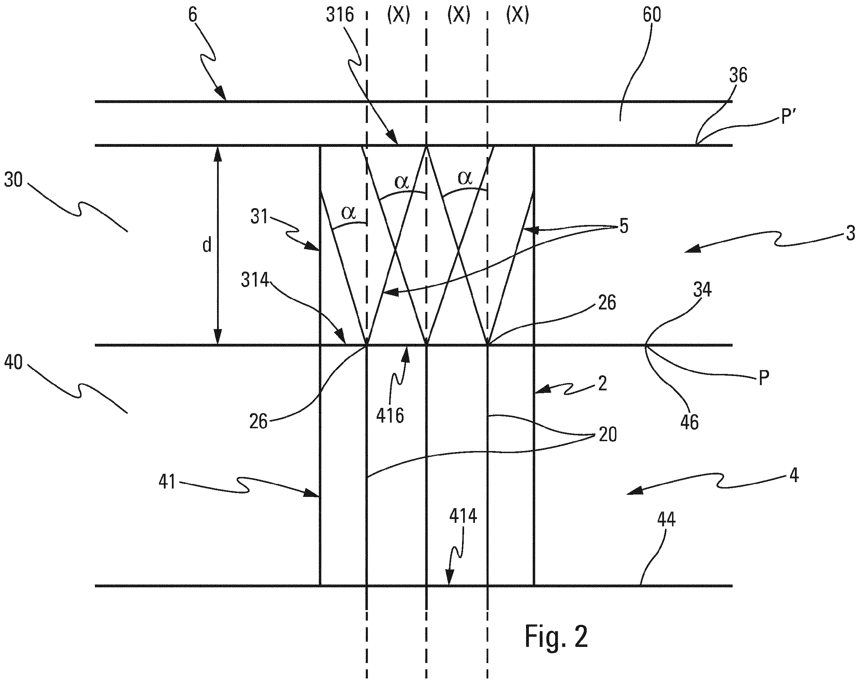

Comme illustré à la figure 2, les fibres optiques 20 sont ici agencées en au moins un faisceau de fibres optiques 20, ici un faisceau de fibres optiques 20. Autrement dit, les fibres optiques 20 d'un même faisceau sont ici liées ensemble dans le sens de leur longueur. Ledit faisceau de fibres optiques 20 comprend quatre fibres optiques 20. Il pourra alternativement en être autrement. Au sein dudit faisceau, les fibres optiques 20 sont agencées sensiblement parallèlement les unes aux autres. Elles sont en outre agencées côte à côte et de manière contigüe les unes aux autres.

L'agencement desdites fibres optiques 20 est avantageusement prévu de manière à limiter autant que possible d'éventuels espaces vides et/ou zones non-propagatrices de lumière notamment entre les fibres optiques 20 d'un même faisceau. Par ailleurs, afin de faciliter leur manipulation et/ou leur installation, les fibres optiques 20 d'un même faisceau pourront par exemple être solidarisées les unes aux autres. Cette solidarisation peut notamment être réalisée en torsadant les fibres 20 appartenant à un même faisceau.

Les fibres optiques 20 d'un même faisceau forment à leur sortie une pluralité de zones émettrices de lumière discontinues. Autrement dit, en sortie desdites fibres optiques 20, le dispositif d'émission comprend à la fois des zones émettrices de lumière et d'autres zones 29, celles-ci non émettrices de lumière. Ici, lesdites zones non-émettrices 29 de lumière correspondent, entre autres, à des espaces entre les fibres optiques 20 adjacentes et/ou à des parties de fibres optiques 20 non émettrices de lumière, par exemple liées par exemple à la présence de gaines de protection dans lesquelles ne se propage pas la lumière.

Comme illustré en particulier à la figure 2, le flux lumineux, lorsqu'il est issu de l'extrémité de sortie 26 des fibres optiques 20, se présente sensiblement sous la forme de cônes de révolution, dit cônes lumineux 5. Ces cônes lumineux 5 peuvent être caractérisés géométriquement par un axe optique X parallèle à la direction principale de propagation du flux lumineux au niveau des extrémités de sortie 26 des fibres optiques 20 et par un angle d'ouverture α proportionnel à une ouverture numérique des fibres optiques 20. On note également qu'une ouverture angulaire du flux lumineux, égale au double de l'angle d'ouverture a, à la sortie des fibres optiques 20, c'est-à-dire en aval de celles-ci, est ici plus faible qu'à la sortie de la source émettrice 1. A la sortie des fibres optiques 20, ledit angle d'ouverture α est par exemple approximativement égal à 30 degrés.

Autrement dit, les guides de lumière 2 sont conçus de manière à générer des faisceaux lumineux dont l'ouverture angulaire est plus faible que celle du flux lumineux issu de la source émettrice 1.

Ici, les fibres optiques 20 d'un même faisceau sont agencées de sorte que leurs extrémités de sortie 26 sont sensiblement disposées dans un même plan, dit plan d'émission P. Autrement dit, les extrémités de sortie 26 des fibres optiques 20 sont sensiblement comprises dans ledit plan d'émission P. On note de plus que les extrémités de sorties 26 de fibres optiques 20 appartenant à des faisceaux de fibres optiques 20 distincts pourront ne pas être disposées dans un même plan. Avantageusement, cela permet de produire des effets esthétiques et/ou optiques différents.

De plus, au voisinage dudit plan d'émission P, les fibres optiques 20 s'étendent avantageusement de manière sensiblement orthogonale audit plan d'émission P. En d'autres termes, au niveau de leurs extrémités de sortie 26, les directions principales d'extension des fibres optiques 20 appartenant à un même faisceau sont toutes parallèles les unes aux autres et perpendiculaires au plan d'émission P. Autrement dit, les fibres optiques 20 sont agencées de sorte que la direction principale de propagation du flux lumineux soit, à la sortie des fibres optiques 20, orthogonale au plan d'émission P.

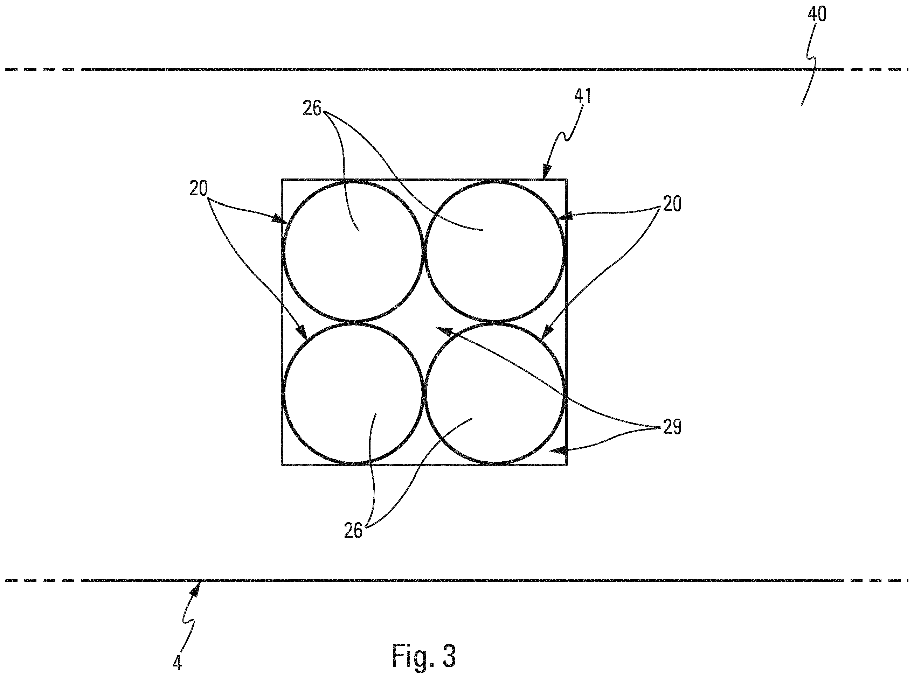

On note que, comme cela est visible à la figure 3, le plan d'émission P comprend lesdites zones émettrices de lumière du flux lumineux, correspondant à au moins une partie de l'extrémité de sortie 26 des fibres optiques 20, et lesdites zones non émettrices 29 de lumière.

Il est à noter également qu'étant donné l'agencement des fibres optiques 20, l'axe optique X de chaque cône lumineux 5 est perpendiculaire au plan d'émission P. Lesdits axes optiques X sont en outre parallèles à la direction principale d'extension des fibres optiques 20 au niveau de leurs extrémités de sortie 26.

Le dispositif d'émission pourra comprendre un élément homogénéisant 3. Ledit élément homogénéisant 3 est avantageusement placé au niveau ou à proximité de l'extrémité de sortie 26 des fibres optiques 20. Il est conçu et agencé de manière à permettre l'obtention d'un éclairage dépourvu desdites zones non émettrices 49 de lumière en sortie dudit élément homogénéisant 3. A cet effet, l'élément homogénéisant 3 pourra comprendre une plaque 30 conçue pour être traversée par le flux lumineux issu des fibres optiques 20. Ladite plaque 30 comprend ici une surface d'entrée 34 et une surface de sortie 36, lesdites surfaces d'entrée 34 et de sortie 36 étant parallèles l'une à l'autre. Ladite plaque 30 est ici agencée parallèlement audit plan d'émission P. En particulier, ladite surface d'entrée 34 est ici agencée au niveau du plan d'émission P précédemment décrit, notamment au contact et/ou à proximité immédiate de celui-ci. On note que ladite plaque 30 présente une épaisseur, ladite épaisseur étant mesurée comme la distance séparant ladite surface d'entrée 34 de ladite surface de sortie 36.

Ladite plaque 30 est ici munie d'au moins un canal 31, ici un canal 31. Ledit canal 31 est conçu de manière à être traversé par le flux lumineux issu d'un même faisceau de fibres optiques 20. Avantageusement, la plaque 30 comprend autant de canaux 31 que le dispositif d'émission comprend de faisceaux de fibres optiques 20, voire de sources émettrices de lumière.

Ledit canal 31 est conçu de manière à traverser ladite plaque 30 de part et d'autre. En d'autres termes, ledit canal 31 s'étend entre ladite surface d'entrée 34 et ladite surface de sortie 36 de la plaque 30, notamment de manière orthogonale auxdites surfaces 34 et 36. Ledit canal 31 comprend ici un orifice d'entrée 314 confondu avec la surface d'entrée 34 et un orifice de sortie 316 confondu avec la surface de sortie 36.

Ici, la plaque 30 de l'élément homogénéisant 3 est agencée relativement aux fibres optiques 20 de sorte que les extrémités de sortie 26 des fibres optiques 20 débouchent au niveau de l'orifice d'entrée 314 du canal 31.

Ledit canal 31 présente une section transversale, ladite section transversale étant parallèle aux surfaces d'entrée 34 et de sortie 36. Elle est, par exemple, de forme rectangulaire ou carrée. Alternativement, ladite section transversale pourra présenter une forme différente, par exemple circulaire. Ici, le canal 31 présente au niveau de son orifice d'entrée 314 une section transversale semblable dans sa forme et ses dimensions à une section transversale du faisceau de fibres optiques 20 au niveau des extrémités de sortie 26 desdites fibres optiques 20. Avantageusement, l'orifice d'entrée 314 présente ainsi une forme qui permet au flux lumineux issu des fibres optiques 20 de pénétrer intégralement à l'intérieur du canal 31.

De préférence, les extrémités de sorties 26 des fibres optiques 20 d'un même faisceau de fibres optiques 20 sont agencées de sorte qu'un maximum de fibres optiques 20 puissent déboucher sur l'orifice d'entrée 314. Avantageusement, cette configuration permet de limiter les zones non émettrices de lumière entre les extrémités de sortie 26 des fibres optiques 20.

On note en outre que la section transversale du canal 31 peut présenter des variations de formes et/ou de dimensions entre les orifices d'entrée 314 et de sortie 316. Par exemple, la section transversale du canal 31 pourra présenter des dimensions qui diminuent à mesure que l'on se déplace de l'orifice d'entrée 314 vers l'orifice de sortie 316.

Avantageusement, la surface de sortie 36 de ladite plaque 30 est agencée sensiblement à une distance d du plan d'émission P. Ladite distance d correspond à une distance mesurée entre le plan d'émission P et un plan, dit plan d'intersection P'. Ledit plan d'intersection P' est ici un plan dans lequel les cônes lumineux 5 les plus espacés l'un de l'autre au niveau du plan d'émission P se croisent, lesdits cônes lumineux 5 étant issus des extrémités de sortie 26 de fibres optiques 20.

Ce choix de positionnement de la surface de sortie 36 à la distance d permet d'obtenir en sortie de l'élément homogénéisant 3 un flux lumineux dont l'aspect de la zone émettrice est plus homogène qu'il ne l'était en sortie des fibres optiques 20. En d'autres termes, l'élément homogénéisant 3 permet d'estomper les discontinuités spatiales dues notamment à l'agencement des fibres optiques 20. Autrement dit encore, l'élément homogénéisant 3 est conçu de sorte qu'en sortie de celui-ci soit formé un éclairage dépourvu de zones non-émettrices de lumière.

Dans le cas où la surface d'entrée 34 de la plaque 30 est agencée en contact avec le plan d'émission P, l'épaisseur de la plaque 30 est avantageusement égale ou sensiblement égale à la distance d.

La plaque 30 de l'élément homogénéisant 3 est conçue de manière à ne permettre le passage du flux lumineux qu'à travers le canal 31. A cet effet, la plaque 30 de l'élément homogénéisant 3 est avantageusement soit issue d'un matériau opaque soit recouverte d'une couche opacifiante laissant libre le canal 31. Ladite plaque 30 est par exemple une plaque métallique ou une plaque en matière plastique opaque. Ladite plaque 30 pourra encore comprendre un film holographique.

En choisissant la forme et/ou la dimension de l'orifice de sortie 316, l'élément homogénéisant 3 pourra également être conçu de manière à modifier les contours et/ou la forme générale du flux lumineux issu de la sortie des fibres optiques 20. En particulier, la plaque 30 de l'élément homogénéisant 3 pourra permettre d'obtenir que le flux lumineux présente, en sortie de l'élément homogénéisant 3, des contours rectilignes et/ou une section transversale dont la forme générale a été modifiée. Autrement dit, la forme de l'orifice de sortie 316 pourra permettre de former à la sortie de l'élément homogénéisant 3 un éclairage dépourvu d'irrégularités au niveau de ses contours.

On note également que l'orifice de sortie 316 pourra être conçu de manière à générer une surface lumineuse semblable à une surface lumineuse de la source lumineuse 1.

Avantageusement, le dispositif d'émission comprend en outre un élément de maintien 4. Ledit élément de maintien 4 est configuré pour permettre et/ou faciliter un maintien en position des fibres optiques 20 vis-à-vis de l'élément homogénéisant 3. Plus précisément, l'élément de maintien 4 est configuré pour permettre de maintenir affleurantes les extrémités de sortie 26 des fibres optiques 20 vis-à-vis du canal 31.

Ledit élément de maintien 4 comprend par exemple une plaque de maintien 40. Ladite plaque de maintien 40 est ici plane. Elle est par exemple de contour similaire à la plaque 30 de l'élément homogénéisant 3. On note cependant que ladite plaque de maintien 40 et la plaque 30 de l'élément homogénéisant 3 ne présentent pas nécessairement une épaisseur identique.

Ladite plaque de maintien 40 est avantageusement agencée de manière adjacente à la plaque 30 de l'élément homogénéisant 3, notamment en contact avec et parallèlement à celle-ci. En particulier, la plaque de maintien 40 est conçue pour être disposée au niveau des extrémités de sortie 26 des fibres optiques 20. Elle comprend ici une surface d'entrée 44 et une surface de sortie 46. Ladite surface de sortie 46 est avantageusement disposée en vis-à-vis de la surface d'entrée 34 de la plaque 30 de l'élément homogénéisant 3. Dans le mode de réalisation ici décrit, la plaque de maintien 40 est agencée de manière à être en contact avec l'élément homogénéisant 3 de sorte que la surface de sortie 46 de la plaque de maintien 40 et la surface d'entrée 34 de la plaque 30 de l'élément homogénéisant 3 sont en contact l'une avec l'autre.

La plaque de maintien 40 comprend au moins un canal, dit canal de maintien 41. Ledit canal de maintien 41 comprend par exemple une entrée 414 et une sortie 416, ladite entrée 414 et ladite sortie 416 étant respectivement comprises dans la surface d'entrée 44 et la surface de sortie 46. Ledit canal de maintien 41 traverse la plaque de maintien 40 et s'étend longitudinalement, c'est-à-dire dans le sens de sa longueur, entre ladite entrée 414 et ladite sortie 416.

Ledit canal de maintien 41 est conçu pour être traversé au moins sur une partie de sa longueur par les fibres optiques 20. En d'autres termes, le canal de maintien 41 est conçu de sorte que l'entrée du canal de maintien 41 soit traversée par les fibres optiques 20. Autrement dit encore, ledit canal 41 est agencé de sorte qu'une partie de chacune des fibres optiques 20, ladite partie étant contigüe à l'extrémité de sortie 26, se situe à l'intérieur du canal 41 de la plaque de maintien 4.

Ici, les fibres optiques 20 traversent entièrement le canal 41 de sorte que les extrémités de sortie 26 des fibres optiques 20 sont agencées au niveau de la sortie 416 du canal de maintien 41. En d'autres termes, la surface de sortie 46 de la plaque de maintien 4, le plan d'émission P et la surface d'entrée 34 de la plaque 30 de l'élément homogénéisant 3 sont sensiblement parallèles les uns aux autres, voire confondus les uns avec les autres.

Les fibres optiques 20 sont avantageusement fixées et/ou solidarisées à ladite plaque de maintien 40 notamment par soudage et/ou collage. On note que, notamment après solidarisation des fibres 20 à la plaque de maintien 40, les extrémités de sortie 26 des fibres optiques 20 pourront subir un polissage. Cette opération permet notamment de faciliter l'obtention du plan d'émission P. Ledit polissage pourra notamment intervenir après un collage des fibres optiques 20 d'un même faisceau entre elles.

Le canal de maintien 41 et le canal 31 de l'élément homogénéisant 3 sont agencés de manière à être positionnés l'un en face de l'autre. Avantageusement, ledit canal de maintien 41 possède une section transversale sensiblement identique à celle du canal 31 de la plaque de maintien 3, cela au moins au niveau du plan d'émission P. On note que le canal 31 de la plaque de maintien 3 et le canal de maintien 41 présentent une direction d'extension longitudinale avantageusement confondue avec la direction principale de propagation de la lumière au niveau du plan d'émission P.

Selon l'invention, l'élément de conversion 6 ou convertisseur de lumière est conçu pour être traversé par ledit flux lumineux de sorte que la lumière issue de l'élément de conversion 6 est émise dans n'importe quelle direction ou au moins dans de multiples directions. Autrement dit, ledit élément de conversion 6 est conçu pour augmenter l'ouverture angulaire des faisceaux lumineux générés par les guides de lumières 2.

On note que l'élément de conversion 6 permet d'obtenir, en sortie dudit élément de conversion 6, des faisceaux lumineux dont l'intensité lumineuse est sensiblement identique dans toutes les directions d'émission.

L'élément de conversion 6 comprend ici au moins un luminophore ou matériau luminescent et/ou un matériau équivalent. Le au moins un luminophore est conçu pour absorber au moins une partie d'au moins une lumière d'excitation émise par la source lumineuse 1. Ledit luminophore est conçu pour convertir au moins une partie de ladite lumière d'excitation absorbée en une lumière d'émission ayant une longueur d'onde différente de celle de la lumière d'excitation.

En sortie du au moins un luminophore, les faisceaux lumineux pourront résulter de la complète conversion de la lumière d'excitation en lumière d'émission. Alternativement, les faisceaux lumineux pourront résulter de la synthèse additive de la lumière d'excitation non convertie et de la lumière d'excitation convertie, notamment dans le cas où la lumière d'excitation n'aurait pas été complètement convertie.

En particulier, ledit élément de conversion 6 pourra être composé de luminophore à base de céramique et/ou d'un polymère chargé avec un luminophore organique ou inorganique. Ledit élément de conversion 6 pourra également ou alternativement comprendre un matériau transparent à faible dispersion et/ou tout autre matériau remplissant une fonction similaire.

Comme illustré aux figures 1 et 2, ledit élément de conversion 6 présente avantageusement une structure à plat. Il comprend par exemple une plaque ou une couche de conversion 60 de matériaux, ici une couche de conversion 60.

Avantageusement, ladite couche de conversion 60 est agencée au niveau de la sortie de l'élément homogénéisant 3. En particulier, ladite couche de conversion 60 est avantageusement agencée en contact avec la surface de sortie 36 de la plaque 30, au niveau de l'orifice de sortie 316. Autrement dit, la couche de conversion pourra être agencée de manière à recouvrir ledit orifice de sortie 316 de l'élément homogénéisant 3. En d'autres termes, ledit élément de conversion 6 pourra être disposé au niveau du plan d'intersection P'.

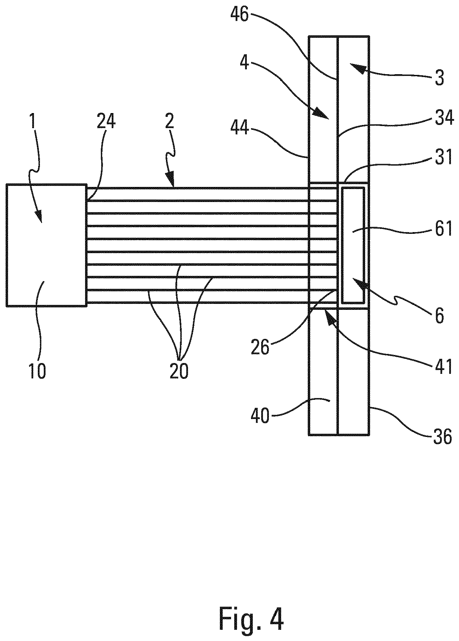

Selon un autre mode de réalisation, illustré à la figure 4, ledit élément de conversion 6 est agencé à l'intérieur du canal 31. L'élément de conversion 6 pourra alors comprendre un bloc de conversion 61, ledit bloc 61 étant agencé entre la surface d'entrée 34 et la surface de sortie 36 de l'élément homogénéisant 3.

On note que l'élément de conversion 6 peut être choisi de manière à convertir une lumière incidente bleue, rouge ou verte. On note encore que l'élément de conversion 6 pourra comprendre plusieurs types de luminophore notamment afin de créer un spectre d'émission aux propriétés photométriques souhaitées.

Alternativement, dans le cas où la source émettrice comprend une source de lumière bleue, par exemple un laser, ledit élément de conversion 6 pourra être formé d'une plaque de conversion de lumière.

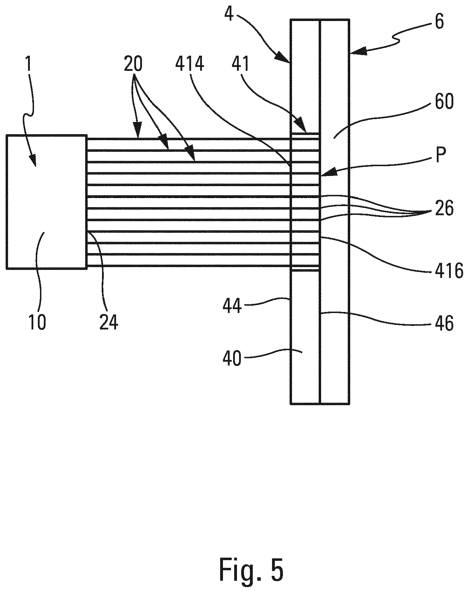

Dans un autre mode de réalisation,, illustré à la figure 5, le dispositif d'émission pourra être dépourvu d'élément homogénéisant 3. Dans ce cas, ledit élément de conversion 6 est par exemple agencé directement à la sortie des guides de lumière 2, au niveau ou à proximité du plan d'émission P. En particulier, l'élément de conversion 6 est alors agencé de manière à recouvrir les extrémités de sorties 26 des guides de lumière 2. Par exemple, l'élément de conversion 6 pourra alors être disposé au niveau de l'élément de maintien 4, au niveau de la surface de sortie 46.

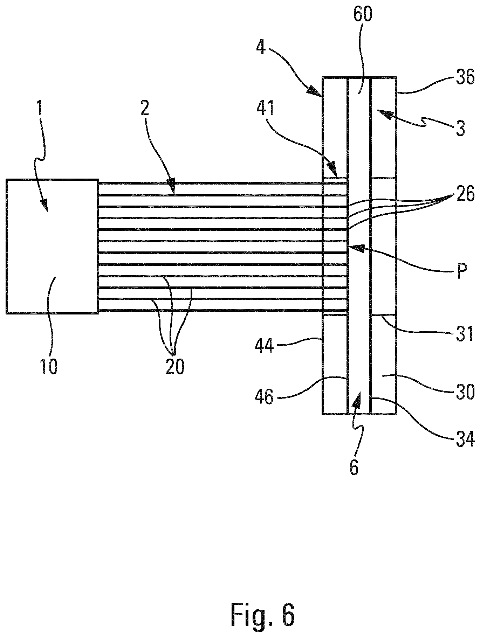

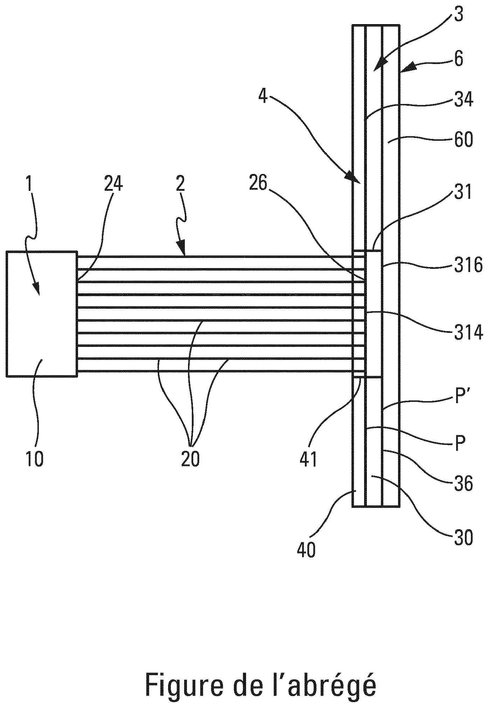

Dans un autre mode de réalisation illustré à la figure 6, l'élément homogénéisant 3 pourra être agencé entre les extrémités de sortie 26 des fibres optiques 20 et l'élément de conversion 6. Ici, ledit élément de conversion 6 est sous forme de couche de conversion 60. Ladite couche de conversion 60 est agencée au niveau de l'entrée de l'élément homogénéisant 3. En particulier, ladite couche de conversion 60 est avantageusement agencée en contact avec la surface d'entrée 34 de la plaque 30, au niveau de l'orifice d'entrée 314. Autrement dit, la couche de conversion 60 pourra être agencée de manière à recouvrir ledit orifice d'entrée 314 de l'élément homogénéisant 3.

On note qu'une épaisseur du bloc 61 ou de la couche de conversion 60, ladite épaisseur étant mesurée orthogonalement au plan d'émission P, pourra être choisie notamment en fonction de l'ouverture angulaire des faisceaux lumineux souhaitée en sortie de l'élément de conversion 6. On aura compris que les faisceaux lumineux issus de l'élément de conversion 6 présente avantageusement une ouverture angulaire plus grande que l'ouverture angulaire de la lumière issue des guides de lumière 2. On note que l'ouverture angulaire des faisceaux lumineux en sortie de l'élément de conversion 6 est par exemple sensiblement égale au double de l'ouverture angulaire des faisceaux lumineux en sortie des fibres optiques 20. Ici, l'angle d'ouverture α des faisceaux lumineux en sortie de l'élément de conversion 6 est approximativement égal à 60 degrés. L'augmentation de l'ouverture angulaire permet d'éclairer des zones qui n'auraient pas été éclairées sans la présence de l'élément de conversion 6. L'invention concerne encore un projecteur comprenant un tel dispositif d'émission. L'invention permet alors de placer la source lumineuse 1 au choix à proximité ou à distance notamment d'optiques de mise en forme de la lumière. La source lumineuse 1 pourra être agencée à l'intérieur ou à l'extérieur d'un boitier dudit projecteur.

## Revendications

1. Dispositif lumineux, notamment pour véhicule automobile, comprenant au moins une source lumineuse (1), plusieurs guides de lumière (2) et au moins un élément de conversion (6), lesdits guides de lumière (2) étant aptes à acheminer la lumière de la source lumineuse (1) à l'élément de conversion (6), lesdits guides de lumière étant configurés pour générer des faisceaux lumineux présentant une ouverture angulaire, ledit élément de conversion (6) étant conçu pour être traversé par lesdits faisceaux lumineux afin d'augmenter l'ouverture angulaire desdits faisceaux lumineux,
comprenant en outre un élément de maintien (4), ledit élément de maintien (4) étant agencé pour maintenir les guides de lumière (2) relativement audit élément de conversion (6), **caractérisé en ce que** ledit élément de maintien (4) comprend au moins un canal (41) agencé pour accueillir au moins une partie des guides de lumière (2), et **caractérisé en ce que** le dispositif lumineux comprend en outre au moins un élément homogénéisant (3), lesdits guides de lumière (2) formant une pluralité de zones émettrices de lumière discontinues à une sortie desdits guides (2), ledit élément homogénéisant (3) étant agencé pour être traversé par la lumière issue desdits guides (2) afin d'obtenir un faisceau lumineux dépourvu de zones non-émettrices (29) de lumière.

2. Dispositif selon la revendication précédente, dans lequel les guides de lumière (2) comprennent des fibres optiques (20).

3. Dispositif selon l'une quelconque des revendications précédentes, dans lequel les guides de lumière (2) sont agencés en un faisceau, des extrémités de sortie (26) des guides de lumière (2) dudit faisceau étant disposées de manière à être sensiblement confondues avec un même plan, dit plan d'émission (P).

4. Dispositif selon la revendication précédente, dans lequel les extrémités de sortie (26) des guides de lumière (2) ont été polies de manière à former ledit plan d'émission (P).

5. Dispositif d'émission selon l'une quelconque des revendications 3 ou 4, dans lequel l'élément de conversion est disposé au niveau du plan d'émission (P).

6. Dispositif selon l'une quelconque des revendications précédentes dans lequel l'élément de conversion est apte à diffuser les faisceaux lumineux dans toutes les directions.

7. Dispositif selon l'une quelconque des revendications précédentes dans lequel l'élément de conversion présente une structure à plat.

8. Dispositif selon l'une quelconque des revendications précédentes, dans lequel l'élément de conversion (6) comprend un matériau transparent à faible dispersion.

9. Dispositif selon l'une quelconque des revendications précédentes dans lequel l'élément de conversion (6) comprend au moins un luminophore.

10. Dispositif selon la revendication 1 dans lequel l'élément homogénéisant (3) comprend une plaque (30) munie d'un canal (31), ledit élément homogénéisant (3) étant agencé de manière à ce que ledit canal (31) soit traversé par la lumière issue des guides de lumière (2).

11. Dispositif selon la revendication précédente, dans lequel l'élément de conversion (6) est agencé à l'intérieur dudit canal (31).

12. Dispositif selon l'une quelconque des revendications 1 ou 10, dans lequel l'élément homogénéisant (3) est agencé entre la sortie desdits guides de lumière (2) et ledit élément de conversion (6).

13. Projecteur, notamment pour véhicule automobile, comprenant un dispositif lumineux selon l'une quelconque des revendications précédentes.

## Patentansprüche

1. Leuchtvorrichtung, insbesondere für ein Kraftfahrzeug, umfassend mindestens eine Lichtquelle (1), mehrere Lichtleiter (2) und mindestens ein Umwandlungselement (6), wobei die Lichtleiter (2) geeignet sind, das Licht von der Lichtquelle (1) zu dem Umwandlungselement (6) zu transportieren, wobei die Lichtleiter konfiguriert sind, um Lichtstrahlen zu erzeugen, die eine Winkelöffnung aufweisen, wobei das Umwandlungselement (6) ausgelegt ist, um von den Lichtstrahlen durchquert zu werden, um die Öffnung der Lichtstrahlen zu erhöhen,
ferner umfassend ein Halteelement (4), wobei das Halteelement (4) ausgebildet ist, um die Lichtleiter (2) jeweils an dem Umwandlungselement (6) zu halten,
**dadurch gekennzeichnet, dass** das Halteelement (4) mindestens einen Kanal (41) aufweist, der ausgebildet ist, um mindestens einen Teil der Lichtleiter (2) aufzunehmen, und
**dadurch gekennzeichnet, dass** die Leuchtvorrichtung ferner mindestens ein homogenisierendes Element (3) aufweist, wobei die Lichtleiter (2) mehrere diskontinuierliche lichtemittierende Bereiche an einem Ausgang der Führungen (2) bilden, wobei das homogenisierende Element (3) angeordnet ist, um von dem Licht, das aus den Lichtleitern (2) austritt, durchquert zu werden, um einen Lichtstrahl ohne nichtlichtemittierende Bereiche (29) zu erhalten.

2. Vorrichtung nach dem vorhergehenden Anspruch, wobei die Lichtleiter (2) optische Fasern (20) aufweisen.

3. Vorrichtung nach einem der vorhergehenden Ansprüche, wobei Lichtleiter (2) in einem Bündel ausgebildet sind, wobei Austrittsenden (26) der Lichtleiter (2) des Bündels derart angeordnet sind, um im Wesentlichen mit einer gleichen Ebene, die Emissionsebene (P) genannt wird, zusammenzufallen.

4. Vorrichtung nach dem vorhergehenden Anspruch, wobei Austrittsenden (26) der Lichtleiter (2) derart geschliffen worden sind, um die Emissionsebene (P) zu bilden.

5. Emissionsvorrichtung nach einem der Ansprüche 3 oder 4, wobei das Umwandlungselement an der Emissionsebene (P) angeordnet ist.

6. Vorrichtung nach einem der vorhergehenden Ansprüche, wobei das Umwandlungselement geeignet ist, die Lichtstrahlen in alle Richtungen zu verbreiten.

7. Vorrichtung nach einem der vorhergehenden Ansprüche, wobei das Umwandlungselement eine flache Struktur aufweist.

8. Vorrichtung nach einem der vorhergehenden Ansprüche, wobei das Umwandlungselement (6) ein transparentes Material mit geringer Dispersion aufweist.

9. Vorrichtung nach einem der vorhergehenden Ansprüche, wobei das Umwandlungselement (6) mindestens einen Luminophor aufweist.

10. Vorrichtung nach Anspruch 1, wobei das homogenisierende Element (3) eine Platte (30) aufweist, die mit einem Kanal (31) versehen ist, wobei das homogenisierende Element (3) derart ausgebildet ist, dass der Kanal (31) von dem Licht durchquert wird, das aus den Lichtleitern (2) austritt.

11. Vorrichtung nach dem vorhergehenden Anspruch, wobei das Umwandlungselement (6) im Inneren des Kanals (31) ausgebildet ist.

12. Vorrichtung nach einem der Ansprüche 1 oder 10, wobei das homogenisierende Element (3) zwischen dem Austritt der Lichtleiter (2) und dem Umwandlungselement (6) ausgebildet ist.

13. Scheinwerfer, insbesondere für ein Kraftfahrzeug, umfassend eine Leuchtvorrichtung nach einem der vorhergehenden Ansprüche.

## Claims

1. Lighting device, in particular for a motor-vehicle, comprising at least one light source (1), a plurality of light guides (2) and at least one converting element (6), said light guides (2) being able to convey light from the light source (1) to the converting element (6), said light guides being configured to generate light beams having an angular aperture, said converting element (6) being designed to be passed through by said light beams in order to increase the angular aperture of said light beams, furthermore comprising a holding element (4), said holding element (4) being arranged to hold the light guides (2) relative to said converting element (6), **characterized in that** said holding element (4) comprises at least one channel (41) that is arranged to accommodate at least some of the light guides (2),
and **characterized in that** the lighting device furthermore comprises at least one homogenizing element (3), said light guides (2) forming a plurality of discontinuous light-emitting zones at an exit of said guides (2), said homogenizing element (3) being arranged to be passed through by the light output from said guides (2) in order to obtain a light beam that is devoid of non-light-emitting zones (29).

2. Device according to the preceding claim, wherein the light guides (2) comprise optical fibres (20).

3. Device according to any one of the preceding claims, wherein the light guides (2) are arranged in a bundle, exit ends (26) of the light guides (2) of said bundle being placed so as to be substantially coincident with a given plane, called the emission plane (P).

4. Device according to the preceding claim, wherein the exit ends (26) of the light guides (2) have been polished so as to form said emission plane (P).

5. Emitting device according to either one of claims 3 and 4, wherein the converting element is placed level with the emitting plane (P).

6. Device according to any one of the preceding claims, wherein the converting element is able to scatter the light beams in all directions.

7. Device according to any one of the preceding claims, wherein the converting element has a flat structure.

8. Device according to any one of the preceding claims, wherein the converting element (6) comprises a transparent low-dispersion material.

9. Device according to any one of the preceding claims, wherein the converting element (6) comprises at least one luminophore.

10. Device according to Claim 1, wherein the homogenizing element (3) comprises a plate (30) that is equipped with a channel (31), said homogenizing element (3) being arranged so that said channel (31) is passed through by the light output by the light guides (2).

11. Device according to the preceding claim, wherein the converting element (6) is arranged in the interior of said channel (31).

12. Device according to either one of Claims 1 and 10, wherein the homogenizing element (3) is arranged between the exit of said light guides (2) and said converting element (6).

13. Headlamp, in particular for a motor-vehicle, comprising a lighting device according to any one of the preceding claims.
